# EUROPEAN PATENT SPECIFICATION

(11) **EP 2 563 994 B1**
(45) Date of publication and mention of the grant of the patent: **01.03.2017**
(21) Application number: 11774475.5
(22) Date of filing: 20.04.2011
(51) Int. Cl.: F03D 1/00, F03D 13/20, F03D 13/10, E04H 12/34

(54) **METHOD FOR ASSEMBLING A WIND TURBINE TOWER ON AN ERECTION FOUNDATION AND A DEVICE**
VERFAHREN ZUR MONTAGE EINES WINDKRAFTWERKTURMS AUF EINEM INSTALLATIONSFUNDAMENT UND VORRICHTUNG DAFÜR
PROCÉDÉ PERMETTANT D'ASSEMBLER UNE TOUR D'ÉOLIENNE SUR DES FONDATIONS D'ÉDIFICATION, ET DISPOSITIF ASSOCIÉ

(30) Priority: 27.04.2010 FI 20105460
(43) Date of publication of application: 06.03.2013
(73) Proprietor: Consolis Technology Oy Ab, 01510 Vantaa (FI)
(72) Inventor: JÄRVI, Jouko, FI-02200 Espoo (FI); KANKKUNEN, Heikki, FI-01690 Vantaa (FI)
(74) Representative: Seppo Laine Oy
(86) International application number: PCT/FI2011/050357
(87) International publication number: WO 2011/135172

(56) References cited:
- EP-A1- 1 876 316
- EP-A1- 1 947 263
- WO-A1-2004/076781
- GB-A- 465 086
- JP-A- 9 032 295
- JP-A- 9 032 295
- JP-A- 2003 184 730
- US-A1- 2009 087 311
- US-A1- 2009 087 311

## Description

The invention relates to a method for assembling a wind turbine tower, wherein the wind turbine tower is assembled from concrete ring elements with the help of an assembly table, a multifunctional carriage and an assembly device. In addition the invention relates to the device used for assembly.

Wind turbines are important sources of renewable energy and the number of wind turbines is growing rapidly. Wind turbines will be more effective when built higher than today, which will increase the challenges of building wind turbine towers.

Wind turbine towers are traditionally made of steel or concrete. The use of steel, especially in high towers, is problematic because of the large diameter they require, therefore transporting parts to the construction site is difficult. Similarly, vibration of the steel structure may restrict its use in high towers. Concrete structures are made either by casting on site or in factory-made prefabricated elements. The very time-consuming casting on site contains plenty of phases and is sensitive to weather conditions. Factory-prefabricated concrete elements are transported to the worksite in parts and are assembled on site using a crane.

One method for assembling the tower from prefabricated concrete elements is presented in patent application FI 20105116, where the tower part consists of sections assembled from concrete elements, which are placed on top of each other to form the tower. To assist in assembling the sections, a building base is used, on which base the precast concrete elements are positioned and their seams concreted. After the seam concrete of the section has cured, it is lifted onto the foundations and sections are added until the tower is completed.

The problem in the above described methods for assembling wind turbine towers is the capacity requirements for the cranes needed to assemble still higher wind turbine towers. Lifting parts of the towers rising to over a hundred meters into place requires effective cranes, the transportation, assembly and use of which consume time, resources and money. The aim of the present invention is to remove the above-mentioned disadvantages.

Further methods and/or devices are disclosed in JP 9032295 A, WO 2004/076781 A1, and US 2009/087311 A1.

In the solution according to the invention, the wind turbine tower is assembled on an erection foundation, whereby at least two ring elements, as high as part of the tower, are composed from concrete segments, and the ring elements are lifted into superimposed positions in the order of assembly. The first ring element is lifted in an upright position to the vertical position of the next ring element, and locked at that height. The following ring elements are placed individually in the assembly order below the previous ring element and lifted with the previous ring element or the ring elements the height of the next ring element, and locked at that height. The last ring element is lifted into contact with the previous ring element and released connected together to a suspended state, and the superimposed ring elements are lowered onto the erection foundation.

The device for assembling the wind turbine tower on the erection foundation comprises the installation path, the assembly table, the multifunctional carriage and the assembly device on the erection foundation. In addition, a crane movable on the installation path can be used.

More precisely, the method according to the invention is defined in claim 1 and the device according to the invention is defined in claim 7.

The invention and its details will be described in more detail in the following, with reference to the enclosed drawing, wherein
Fig. 1 shows one assembly phase of a wind turbine tower according to the invention, where the ring element is assembled on the erection foundation,
Fig. 2 shows one other assembly phase of a wind turbine tower according to the invention, where a ring element is assembled on the erection foundation,
Fig. 3 shows an assembly phase of a wind turbine tower according to the invention,
Fig. 4 shows an assembly phase of a wind turbine tower according to the invention, where the generator is being installed,
Fig. 5 shows an assembly phase of a wind turbine tower according to the invention, where the steel part of a hybrid tower is being installed,
Fig. 6 shows an assembly phase of a wind turbine tower according to the invention, where the blades of the generator are being installed,
Fig. 7 shows an assembly phase of a wind turbine tower according to the invention, where the multifunctional carriage is shown from the front in its lower and upper positions; and
Fig. 8 shows an assembly phase of a wind turbine tower according to the invention, where the multifunctional carriage is shown from the side in its lower and upper positions.

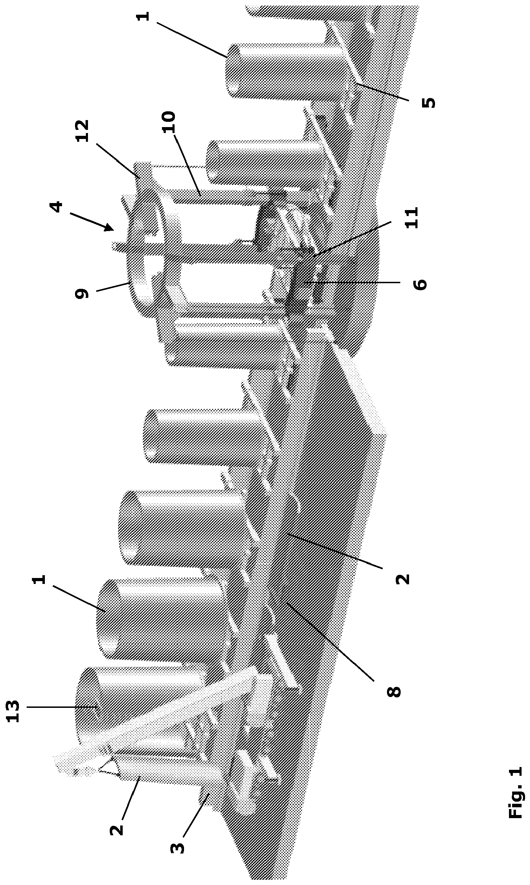

Figure 1 illustrates one assembly phase of a wind turbine tower according to the invention, where the ring element 1 is assembled on the assembly table 5. From now on, the wind turbine tower is called the tower. The tower consists of the ring elements 1 assembled on the site, which elements are assembled from concrete segments 2 of the same height as the ring element 1. The segments 2 have been transported from a production site to a location next to the tower, where the actual assembly of the tower occurs.

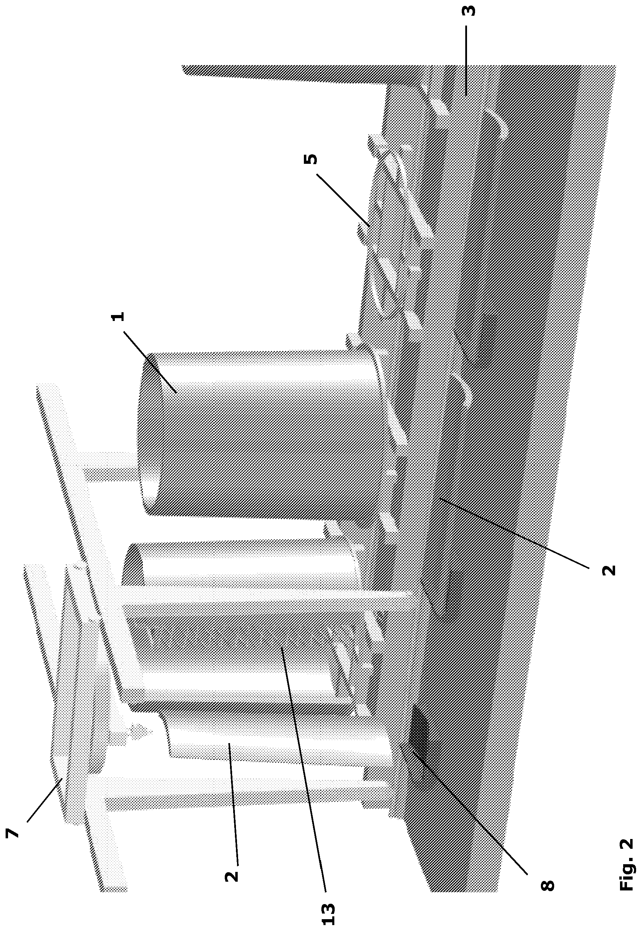

In the first phase, the installation path 3 is assembled on the installation site, either on the other or on both sides of the tower foundations. The installation path 3 serves as a platform for assembling the ring elements and for transferring them to underneath the actual tower assembly device 4. The installation path 3 includes rails for the assembly tables 5 required for assembling the ring elements 1, for the gantry crane 7 (Figure 2) and for the multifunctional carriage 6.

In the assembly table 5 is the stencil for the segments 2 to be installed and for the binding points of the installation support struts for supporting the segments 2. The ring-shaped assembly table 5 is open in the middle and placed high enough, so that the scissor platform crane 13 is able to move inside the assembled ring element 1 and to make the necessary joints and buildups between the segments 2, such as the drillings and the fasteners required for the lift, the ladders and other equipment of the tower.

After the installation path 3 is assembled, the assembly tables 5 for the ring elements 1, the gantry crane 7 and the multifunctional carriage 6 are lifted on top of the installation path 3. Thereafter the actual assembly device 4 is assembled, which combines already assembled and joined ring elements 1 to form the tower. The assembly device 4 consists of frame guide columns 10 , locking collars 11 climbing along the guide columns 10 and the upper locking ring 9 used for suspending the tower, where the movable locking arms 12 are located radially in a circular fashion.

Figure 2 shows the assembly of the ring element 1 from the concrete segments 2 at the working site on the assembly table 5 on top of the installation path 3 with the aid of gantry crane 7 and turning device 8. The seams of the completed ring element 1 are soldered to produce a monolithic structure. Instead of the gantry crane 7, the ring elements 1 can also be assembled using the standard crane according to Figure 1. After the assembly, the multifunctional carriage 6 moves under the ring element 1, raises it up together with the assembly table 5 and moves the ring element 1 and the assembly table 5 over the foundations of the tower under the tower assembly device 4. The multifunctional carriage 6 has driving motors and wheels under the longitudinal beams for transport and hydraulic cylinders for lifting the ring element 1.

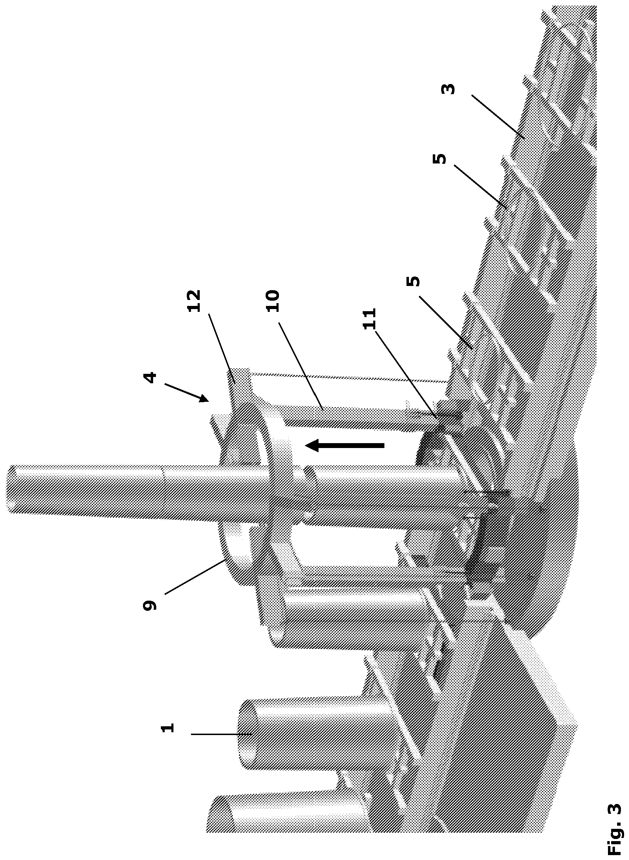

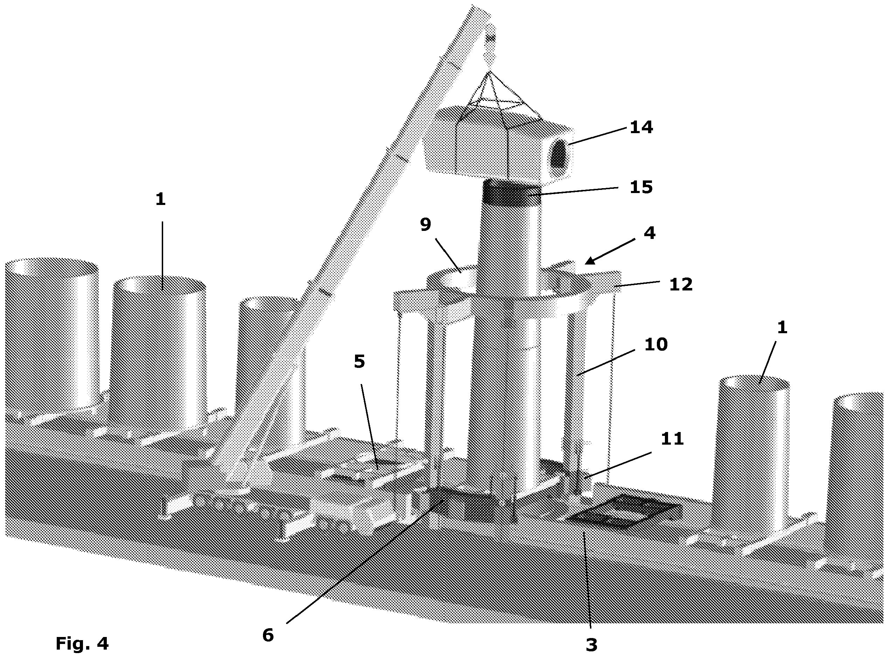

Figure 3 shows the assembly of the tower in assembly device 4, from top to bottom in reverse order, so that the upper ring element 1 of the tower is installed first, and under it the lower ring elements 1 are threaded one by one. Before the actual tower assembly it is possible to install and fasten the required adapter 15 (Figure 4) on top of the topmost, assembled ring element 1 between the wind turbine generator 14 and the ring element 1. The adapter 15 may also be installed at a later stage, for example, during installation of the generator 14.

The tower assembly begins when, below the assembly device 4 in multifunctional carriage 6 on assembly table 5, the top ring element 1 is lifted into an upright position using the locking collars 11 climbing up along the assembly device 4. The lifted ring element 1 is locked into place in its raised position with the aid of locking arms 12 of the locking ring 9 located on the top part of the assembly device 4. At the lower part of the ring element are provided mounting holes which the extensions of the locking arms 12 engage. After the locking, the multifunctional carriage 6 and the assembly table 5 are taken down with the help of locking collars 11, and the multifunctional carriage 6 repositions assembly table 5 and leaves to pick up a new ring element 1.

The other ring elements 1 to be located below the top ring element 1 will be lifted one by one with the aid of the locking collars 11 into contact with ring element 1 above and attached to each other. Thus, the ring elements of the tower thus formed are raised to the upper position with the help of the locking collars 11 and locked into place using locking arms 12. The multifunctional carriage 6 and the assembly table 5 are taken down with the help of locking collars 11 and the multifunctional carriage 6 repositions assembly table 5 and leaves to pick up a new ring element 1.

The bottom tower ring element 1 on the assembly table 5 of multifunctional carriage 6 is raised using locking collars 11 into contact with the above tower and is suspendenly attached to the tower above. The multifunctional carriage 6 and the assembly table 5 are taken down with the help of the locking collars 11 and moved outside of the tower. The locking collars 11 are lifted to align with fastening holes located in the lower part or close to the lower part of the lowest ring element 1, and the extensions of locking collars 11 engage the locking holes of the lower part of the ring element 1. Subsequently, locking arms 12 located at the top of the assembly device 4, which arms have been supporting the tower, are released whereby the full weight of the tower is shifted to the locking collars 11. Finally, the finished tower is lowered as a whole onto the foundations with the help of locking collars 11.

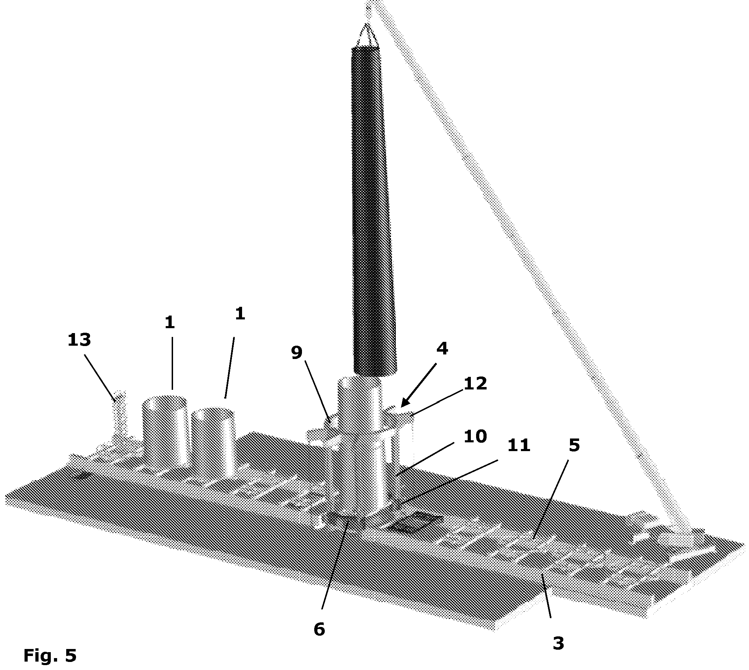

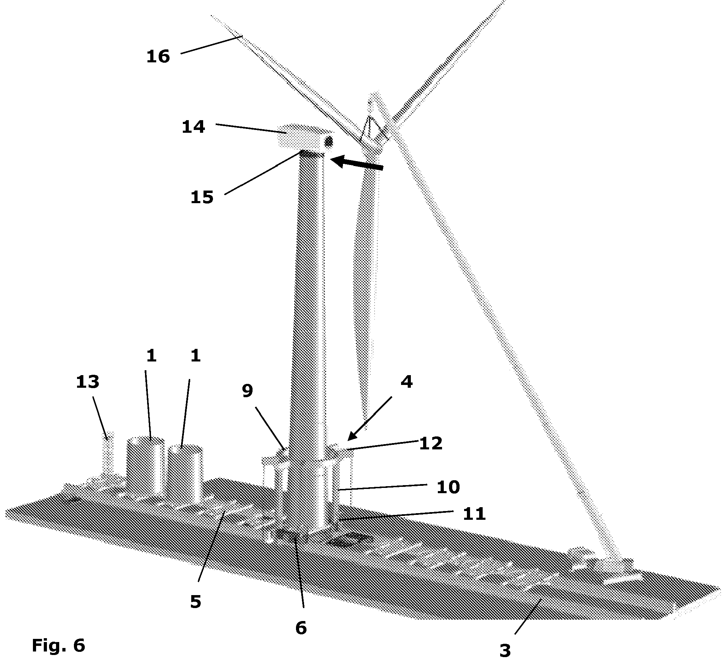

In Figure 4 the wind power generator 14 is installed on top of upper ring element 1 and adapter 15 at the stage when the first ring element 1 has been lifted to the top level of the tower assembly device 4. The frame of the hybrid tower shown in Figure 5 consists of both the steel part and the concrete elements. The upper steel part and the generator 14 are installed at the stage when the vertical position of the concrete part of the tower is at the upper level of the assembly device 4. The generator 14, or the upper steel column and generator 14 can be installed subsequent to any lifting phase of the ring element 1. In Figure 6, the vanes 16 of the wind turbine generator 14 are installed directly from the bed of the transport vehicle at the stage when the tower assembly has progressed so far that the vertical position of the generator 14 corresponds to the dimension of the vane 16. The vanes 16 can also be installed at a later stage.

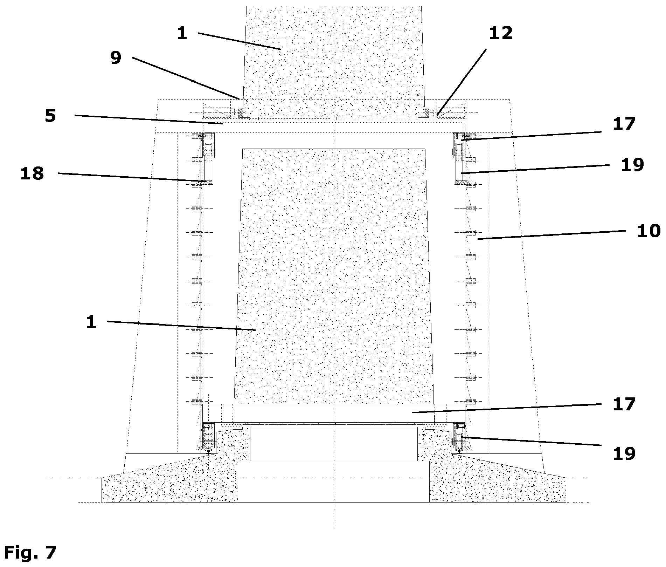

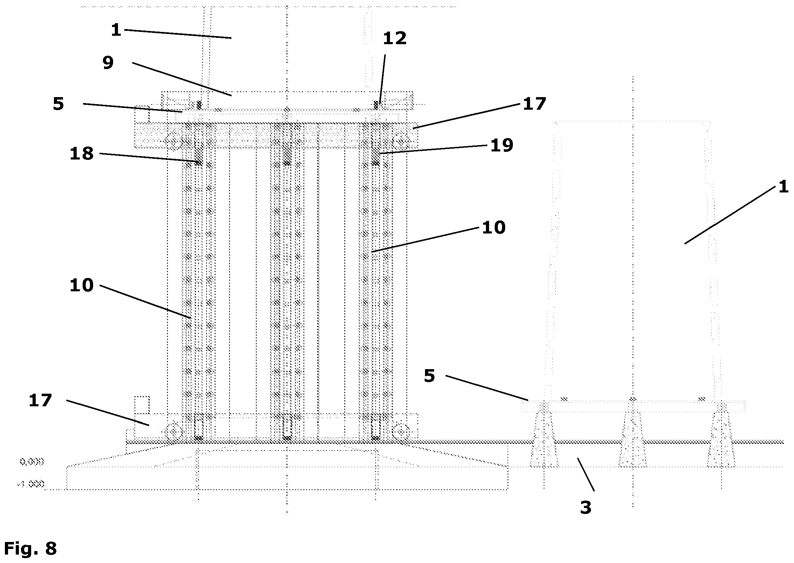

In the above example, a multifunctional carriage 6, which lifts and moves the ring elements 1 under the assembly device 4, has been described. Alternatively, it is possible to use the multifunctional carriage 17 shown in Figure 7, which carriage lifts and moves the ring elements 1 as well as climbs up along the frame of the assembly device 4. In Figure 7, the multifunctional carriage 17 is shown from the front in its upper and lower position. In the Figure 8 multifunctional carriage 17 is shown from the side in its upper and lower position. Multifunctional carriage 17 is provided with an U-shaped wagon, where the frame beam connected to the rear part of the frame is located above the foundations of the tower. The multifunctional carriage 17 is able to park underneath assembly table 5, raise the assemble ring element 1 together with assembly table 5 and transfer it across the tower foundations to below assembly device 4. The multifunctional carriage 17 is provided with a motor and wheels below the frame beam for transfer, and with hydraulic cylinders 19 for lifting the assembly table 5 and for climbing along the frame of assembly device 4. Climbing takes place by means of hydraulic cylinders 19, which have lever-type locking and unlocking mechanisms 18. When such a multifunctional carriage is used, 17 the lowest ring element 1 of the assembly ring of the assembly device 4 comprises two semi-circular structures, which are released from each another after the installation.

The vertical alignment of the tower is controlled for example with the help of spacers fitted between the ring elements, using a plumb wire suspended from the middle of the top of the tower or with a laser. In building the tower, more than one multifunctional carriage can also be used, for example when the installation paths 3 are on both sides of the tower foundations. In this case the multifunctional carriages install segments alternately from different sides of the tower.

Especially in high towers, prestressed steel wires are used. The prestressed steel wires needed to reinforce the tower can be preinstalled inside the top ring element and attached to the adapter at ground level already in the assembly phase, making them easy to straighten and prestress as the assembly of the tower proceeds. Installation and prestressing of the steel wires can be carried out in two stages, whereby for example the top of the tower is prestressed when the vertical position of the tower is at the level of the upper part of the assembly device 4, and the lower part of the tower is prestressed when the tower is ready. It is also possible to prestress only part of the tower or the whole tower in one part.

Using the wind turbine tower assembly method described in the invention, high towers can be built without big cranes, thereby saving time and costs. Furthermore, the above described assembly method is fast, because the segments are assembled in advance on the assembly tables with the help of the gantry cranes, transferred with the multifunctional carriage along the installation path under the assembly device and lifted into the place with the assembly device without the help of the cranes. The wind turbine adapter, the steel parts, the generator and the installation of the vanes are done at the early stage of assembly, when the tower is low and lifting is easy. When working on the ground level it is easier to take care of safety issues and weather changes, wind and winter conditions cause fewer problems. The ring elements are located on the compact area above the installation path, so they are easy to protect from rain for example using a collapsible tent, and to heat. The solution according to the invention is particularly suitable when sufficiently large cranes are not available or when it is not possible to transport big cranes to the assembly site, for example in mountain areas. Large cranes need supporting bases, the construction of which is not required according to the invention, since the tower foundations can be relied upon.

## Claims

1. A method for assembling a wind turbine tower on an erection foundation, in which method at least two ring elements (1), as high as part of the tower, are composed from concrete segments (2) and the ring elements (1) are lifted into a superimposed position in the order of assembly, **characterized in, that**
- the first ring element (1), on an assembly table (5) in a multifunctional carriage (6), is lifted in an upright position to the vertical position of the next ring element (1) using locking collars (11) climbing up along frame guide columns (10) of an assembly device (4) and locked at
that height using a locking ring (9) of the assembly device (4), the multifunctional carriage (6) and the assembly table (5) are taken down with the help of the locking collars (11), and the multifunctional carriage (6) repositions assembly table (5) and leaves to pick up a new ring element (1)
- the following ring elements (1), on an assembly table (5) in a multifunctional carriage (6), are placed individually in the assembly order below the previous ring element (1), lifted with the aid of the locking collars (11) into contact with the ring element (1) above and attached to each other, the ring elements (1) are lifted, with the previous ring element (1) or the ring elements, the height of the next ring element (1) using the locking collars (11), and locked at that height, the multifunctional carriage (6) and the assembly table (5) are taken down with the help of the locking collars (11), and the multifunctional carriage (6) repositions assembly table (5) and leaves to pick up a new ring element (1),
- the last ring element (1), on an assembly table (5) in a multifunctional carriage (6),
is lifted using the locking collars (11) into contact with the previous ring element and released connected together to a suspended state, the multifunctional carriage (6) and the assembly table (5) are taken down with the help of locking collars (11) and moved outside the tower,
- the locking collars (11) are locked to the lowest ring element (1), and
- the superimposed ring elements (1) are lowered with the aid of the locking collars (11) onto the erection foundation.

2. A method according to claim 1, **characterized in, that** a generator (14) is installed subsequent to any lifting phase of the ring element (1).

3. A method according to claim 1, **characterized in, that** an upper steel column and the generator (14) are installed subsequent to any lifting phase of a ring element (1).

4. A method according to claim 2 or 3, **characterized in, that** when the vertical position of the generator (14) corresponds to the dimension of a vane (16), the vanes (16) are installed.

5. A method according to any of the preceding claims, **characterized in, that** prestressed steel wires are installed inside the first ring element (1) and attached to an adapter.

6. A method according to any of the preceding claims, **characterized in, that** the prestressed steel wires of the wind turbine tower are installed and prestressed in two stages.

7. A device for mounting a wind turbine tower on an erection foundation, the tower comprising ring elements (1), which device comprises an installation path (3), an assembly table (5), a multifunctional carriage (6, 17) and an assembly device (4), wherein either
- the multifunctional carriage (17) is provided with wheels and driving motors for the transfer of the ring elements (1) and has hydraulic cylinders (19), which have lever-type locking and unlocking mechanisms (18), wherein with the help of this hydraulic arrangement the multifunctional carriage (17) is able to climb along frame guide columns (10) of the assembly device (4) for lifting a ring element (1) located on the assembly table (5), and wherein the assembly device (4) comprises an upper locking ring (9) configured to suspend the tower, or
- the assembly device (4) consists of frame guide columns (10), locking collars (11) arranged to climb along the guiding columns (10) for lifting ring elements (1) located on the assembly table (5) in the multifunctional carriage (6), and an upper locking ring (9) configured to suspend the tower.

8. A device for mounting a wind turbine tower on an erection foundation according to claim7, **characterized in, that** the locking ring (9) comprises locking arms (12) for attaching a ring element (1) to the locking ring (9).

9. A device for mounting a wind turbine tower on an erection foundation according to claim 7 or 8, **characterized in, that** the frame of the assembly device (4) is outside of the assembled tower.

## Patentansprüche

1. Verfahren zur Montage eines Windkraftwerkturms auf einem Installationsfundament, wobei in dem Verfahren mindestens zwei Ringelemente (1), so hoch wie ein Teil des Turms, aus Betonsegmenten (2) zusammengesetzt sind und die Ringelemente (1) in eine aufeinandergesetzte Position in der Reihenfolge der Montage hochgehoben werden, **dadurch gekennzeichnet, dass**
- das erste Ringelement (1), auf einem Montagetisch (5) in einem multifunktionalen Schlitten (6), in eine aufrechte Position zu der senkrechten Position des nächsten Ringelementes (1) unter Verwendung von Verriegelungskragen (11), die entlang von Führungsrahmensäulen (10) einer Montagevorrichtung (4) hochsteigen, hochgehoben wird und in dieser Höhe unter Verwendung eines Sicherungsrings (9) der Montagevorrichtung (4) verriegelt wird, der multifunktionale Schlitten (6) und der Montagetisch (5) werden mit Hilfe der Verriegelungskragen (11) heruntergeführt und der multifunktionale Schlitten (6) positioniert den Montagetisch (5) neu und fährt zum Aufnehmen eines neuen Ringelementes (1) weg,
- die folgenden Ringelemente (1), auf einem Montagetisch (5) in einem multifunktionalen Schlitten (6), werden einzeln in der Montagereihenfolge unterhalb des vorherigen Ringelements (1) angeordnet, mit der Hilfe der Verriegelungskragen (11) in Kontakt mit dem Ringelement (1) darüber hochgehoben und aneinander befestigt, die Ringelemente (1) werden mit dem vorherigen Ringelement (1) oder den Ringelementen auf die Höhe des nächsten Ringelements (1) unter Verwendung der Verriegelungskragen (11) hochgehoben und in dieser Höhe verriegelt, der multifunktionale Schlitten (6) und der Montagetisch (5) werden mit Hilfe der Verriegelungskragen (11) heruntergeführt und der multifunktionale Schlitten (6) positioniert den Montagetisch (5) neu und fährt zum Aufnehmen eines neuen Ringelementes (1) weg,
- das letzte Ringelement (1), auf einem Montagetisch (5) in einem multifunktionalen Schlitten (6), wird unter Verwendung der Verriegelungskragen (11) in Kontakt mit dem vorherigen Ringelement hochgehoben und miteinander verbunden in einem hängenden Zustand freigegeben, der multifunktionale Schlitten (6) und der Montagetisch (5) werden mit Hilfe der Verriegelungskragen (11) heruntergeführt und außerhalb von dem Turm bewegt,
- die Verriegelungskragen (11) werden an dem untersten Ringelement (1) verriegelt, und
- die aufeinandergesetzten Ringelemente (1) werden mit Hilfe der Verriegelungskragen (11) auf das Installationsfundament herabgelassen.

2. Verfahren nach Anspruch 1, **dadurch gekennzeichnet, dass** ein Generator (14) anschließend an jede Hubphase des Ringelementes (1) installiert wird.

3. Verfahren nach Anspruch 1, **dadurch gekennzeichnet, dass** eine obere Stahlsäule und der Generator (14) anschließend an jede Hubphase eines Ringelementes (1) installiert werden.

4. Verfahren nach Anspruch 2 oder 3, **dadurch gekennzeichnet, dass**, wenn die senkrechte Position des Generators (14) der Abmessung eines Flügels (16) entspricht, die Flügel (16) installiert werden.

5. Verfahren nach einem der vorhergehenden Ansprüche, **dadurch gekennzeichnet, dass** vorgespannte Stahldrähte im Inneren des oberen Ringelements (1) installiert und an einem Adapter befestigt werden.

6. Verfahren nach einem der vorhergehenden Ansprüche, **dadurch gekennzeichnet, dass** die vorgespannten Stahldrähte des Windkraftwerkturms installiert und in zwei Stufen vorgespannt werden.

7. Vorrichtung zur Aufstellung eines Windkraftwerkturms auf einem Installationsfundament, wobei der Turm Ringelemente (1) umfasst, wobei die Vorrichtung eine Installationsbahn (3), einen Montagetisch (5), einen multifunktionalen Schlitten (6, 17) und eine Montagevorrichtung (4) umfasst, wobei entweder
- der multifunktionale Schlitten (17) mit Rädern und Antriebsmotoren für die Übertragung der Ringelemente (1) ausgestattet ist und Hydraulikzylinder (19) aufweist, die hebelartige Verriegelungs- und Entriegelungs-Mechanismen (18) aufweisen, wobei mit Hilfe dieser hydraulischen Anordnung der multifunktionale Schlitten (17) in der Lage ist, entlang von Führungssäulen (10) des Rahmens von der Montagevorrichtung (4) zum Hochheben eines Ringelements (1), das auf dem Montagetisch (5) angeordnet ist, hochzusteigen und wobei die Montagevorrichtung (4) einen oberen Sicherungsring (9) umfasst, der zum Aufhängen des Turmes konfiguriert ist, oder
- die Montagevorrichtung (4) aus Führungssäulen (10) des Rahmens, aus Verriegelungskragen (11), die zum Hochsteigen entlang der Führungssäulen (10) zum Hochheben der Ringelemente (1) eingerichtet sind, die auf dem Montagetisch (5) in dem multifunktionalen Schlitten (6) angeordnet sind, und aus einem oberen Sicherungsring (9) besteht, der zum Aufhängen des Turmes konfiguriert ist.

8. Vorrichtung zur Aufstellung eines Windkraftwerkturmes auf einem Installationsfundament nach Anspruch 7, **dadurch gekennzeichnet, dass** der Sicherungsring (9) Verriegelungsarme (12) zum Befestigen eines Ringelements (1) an dem Sicherungsring (9) umfasst.

9. Vorrichtung zur Aufstellung eines Windkraftwerkturmes auf einem Installationsfundament nach Anspruch 7 oder 8, **dadurch gekennzeichnet, dass** der Rahmen der Montagevorrichtung (4) außerhalb des montierten Turmes ist.

## Revendications

1. Procédé d'assemblage d'une tour d'éolienne sur une fondation de montage, dans lequel au moins deux éléments annulaires (1), aussi élevés qu'une partie de la tour, sont constitués de segments en béton (2) et les éléments annulaires (1) sont soulevés pour être dans une position superposée dans l'ordre d'assemblage, **caractérisé en ce que**
- le premier élément annulaire (1), sur une table d'assemblage (5) dans un chariot multifonctionnel (6), est soulevé en position debout à la position verticale de l'élément annulaire subséquent (1) en utilisant des colliers de verrouillage (11) se hissant le long de colonnes de guidage de châssis (10) d'un dispositif d'assemblage (4) et verrouillé à cette hauteur à l'aide d'une bague de verrouillage (9) du dispositif d'assemblage (4), le chariot multifonctionnel (6) et la table d'assemblage (5) sont descendus à l'aide des colliers de verrouillage (11), et le chariot multifonctionnel (6) repositionne la table d'assemblage (5) et part pour soulever un nouvel élément annulaire (1),
- les éléments annulaires subséquents (1), sur une table d'assemblage (5) dans un chariot multifonctionnel (6), sont placés individuellement dans l'ordre d'assemblage au-dessous de l'élément annulaire précédent (1), soulevés à l'aide des colliers de verrouillage (11) pour être en contact de l'élément annulaire (1) du dessus et fixés les uns aux autres, les éléments annulaires (1) sont soulevés, avec l'élément annulaire (1) ou les éléments annulaires précédents, la hauteur de l'élément annulaire subséquent (1) utilisant les colliers de verrouillage (11), et verrouillés à cette hauteur, le chariot multifonctionnel (6) et la table d'assemblage (5) sont descendus à l'aide des colliers de verrouillage (11), et le chariot multifonctionnel (6) repositionne la table d'assemblage (5) et part pour soulever un nouvel élément annulaire (1),
- le dernier élément annulaire (1), sur une table d'assemblage (5) dans un chariot multifonctionnel (6), est soulevé à l'aide des colliers de verrouillage (11) jusqu'à venir en contact avec l'élément annulaire précédent et relâché raccordé entre eux dans un état suspendu, le chariot multifonctionnel (6) et la table d'assemblage (5) sont descendus à l'aide de colliers de verrouillage (11) et déplacés à côté de la tour,
- les colliers de verrouillage (11) sont verrouillés sur l'élément annulaire le plus bas (1), et
- les éléments annulaires (1) superposés sont abaissés à l'aide des colliers de verrouillage (11) sur la fondation de montage.

2. Procédé selon la revendication 1, **caractérisé en ce que**, un générateur (14) est installé après toute phase de soulèvement de l'élément annulaire (1).

3. Procédé selon la revendication 1, **caractérisé en ce qu'**une colonne d'acier supérieure et le générateur (14) sont installés après toute phase de soulèvement d'un élément annulaire (1).

4. Procédé selon la revendication 2 ou 3, **caractérisé en ce que**, lorsque la position verticale du générateur (14) correspond à la dimension d'une aube (16), les aubes (16) sont installées.

5. Procédé selon l'une quelconque des revendications précédentes, **caractérisé en ce que** des fils d'acier précontraints sont installés à l'intérieur du premier élément annulaire (1) et fixés à un adaptateur.

6. Procédé selon l'une quelconque des revendications précédentes, **caractérisé en ce que** les fils d'acier précontraints de la tour d'éolienne sont installés et précontraints en deux étapes.

7. Dispositif de montage d'une tour d'éolienne sur une fondation de montage, la tour comprenant des éléments annulaires (1), le dispositif comprenant un chemin d'installation (3), une table d'assemblage (5), un chariot multifonctionnel (6, 17) et un dispositif d'assemblage (4), dans lequel
- soit le chariot multifonctionnel (17) est pourvu de roues et de moteurs d'entraînement pour le transfert des éléments annulaires (1) et comporte des cylindres hydrauliques (19), qui comportent des mécanismes de verrouillage et de déverrouillage à levier (18), dans lequel à l'aide de cet arrangement hydraulique, le chariot multifonctionnel (17) est susceptible de se hisser le long de colonnes de guidage de châssis (10) du dispositif d'assemblage (4) pour soulever un élément annulaire (1) situé sur la table d'assemblage (5), et dans lequel le dispositif d'assemblage (4) comprend une bague de verrouillage supérieur (9) configuré pour suspendre la tour,
- soit le dispositif d'assemblage (4) est constitué de colonnes de guidage de châssis (10), de colliers de verrouillage (11) agencés pour grimper le long des colonnes de guidage (10) pour soulever des éléments annulaires (1) situés sur la table d'assemblage (5) dans le chariot multifonctionnel (6), et une bague de verrouillage supérieur (9) configuré pour suspendre la tour.

8. Dispositif de montage d'une tour d'éolienne sur une fondation de montage selon la revendication 7, **caractérisé en ce que** la bague de verrouillage (9) comprend des bras de verrouillage (12) pour fixer un élément annulaire (1) à la bague de verrouillage (9).

9. Dispositif de montage d'une tour d'éolienne sur une fondation de montage selon la revendication 7 ou 8, **caractérisé en ce que** le châssis du dispositif d'assemblage (4) se trouve à l'extérieur de la tour assemblée.
